# EUROPEAN PATENT APPLICATION

(11) **EP 4 814 783 A1**
(43) Date of publication of application: **30.09.2026**
(21) Application number: 26162120.5
(22) Date of filing: 03.03.2026
(51) Int. Cl.: G06F 40/177, G06F 40/18

(54) **INFERRING IMPLICIT RELATIONSHIPS BETWEEN TABLE COLUMNS**

(30) Priority: 28.03.2025 US 202519094447
(71) Applicant: Microsoft Technology Licensing, LLC, Redmond, WA 98052 (US)
(72) Inventor: HE, Yeye, Redmond, 98052 (US); CHAUDHURI, Surajit, Redmond, 98052 (US); ZHANG, Dongmei, Redmond, 98052 (US); ZHANG, Haidong, Redmond, 98052 (US); GE, Song, Redmond, 98052 (US); CUI, Weiwei, Redmond, 98052 (US)
(74) Representative: CMS Cameron McKenna Nabarro Olswang LLP

(57) **Abstract**

The present disclosure generally relates to systems and methods for automatically inferring implicit relationships between columns of an input table. For example, the systems and methods discussed herein infers semantically-accurate functional inter-column relationships with a unified framework that includes speed up options. The systems and methods discussed herein leverage principled statistical tests based on hypothetical analysis that slightly "perturbs" values in an input table to determine the strength of a potential functional relationship between some subset of the input table columns. Based on this determined strength, the systems and methods discussed herein reject potential functional relationships that are likely false-positive while retaining potential functional relationships that are likely true-positive.

## Description

### BACKGROUND

Recent years have seen an increase in the use of computing devices (e.g., mobile devices, personal computers, server devices) to create, store, edit, and share data. For example, tools and applications for creating data tables and other structured data are increasingly common. As spreadsheet applications, charting applications, business intelligence (BI) products, and other applications that make use of tables (and other structured datasets) become more prevalent, so too does the frequency with which data is ported between different types of structured data sets.

For example, a relational table may be created using functions and transformations to generate derived columns-producing rich inter-column relationships within the same table. However, these rich relationships are typically lost once the table is exported and saved into a standard format such as CSV. As such, the inter-column relationships captured in the original table become unusable to leverage in downstream use cases such as for table understanding, data cleaning, and data provenance.

The subject matter in the background section is intended to provide an overview of the overall context for the subject matter disclosed herein. The subject matter discussed in the background section should not be assumed to be prior art merely as a result of its mention in the background section. Similarly, a problem mentioned in the background section or associated with the subject matter of the background section should not be assumed to have been previously recognized in the prior art.

### BRIEF DESCRIPTION OF THE DRAWINGS

FIG. 1 illustrates an example overview of a digital environment where a functional relationship system operates in connection with a client device to automatically infer inter-column relationships.
FIG. 2 illustrates an overview of steps performed by the functional relationship system to generate a set of most likely functional relationships between columns of an input table.
FIGS. 3A-3C illustrate examples of different types of functional relationships that can be inferred by the functional relationship system in accordance with one or more embodiments.
FIG. 4A illustrates an overview of a perturbation test performed by the functional relationship system while inferring inter-column relationships in accordance with one or more embodiments.
FIG. 4B illustrates additional detail with regard to how the functional relationship system handles noisy data in accordance with one or more embodiments.
FIG. 4C illustrates additional detail in connection with an independence test performed by the functional relationship system in accordance with one or more embodiments.
FIG. 5 illustrates a block diagram of the functional relationship system operating within a server in accordance with one or more embodiments.
FIG. 6 illustrates a series of acts for automatically inferring functional relationships between columns of an input table in accordance with one or more embodiments.
FIG. 7 illustrates certain components that may be included within a computer system in accordance with one or more embodiments.

### DETAILED DESCRIPTION

The present disclosure relates to systems and methods for automatically inferring implicit relationships between columns of a single data table. As discussed above, existing systems fail to maintain inter-column relationships when data is transferred from one structured data format to another. In an effort to rebuild these relationships, such existing systems are limited to inferring single types of potential relationships between columns (e.g., arithmetic relationships), and relying on human experts to make final determinations.

Some automated inference systems apply known arithmetic functions, string transformations, and other functional dependencies to input tables to identify relationships between data table columns. For example, these automated inference systems can enumerate all possible column combinations as well as all possible relationships between those columns and test whether a candidate relation holds on a column combination from an input table. This approach, however, leads to large numbers of "false-positive" or spuriously identified column relationships. These spurious relationships appear to hold on a particular table instance, but do not make semantic sense-nor do they hold in general. The likelihood of such spurious relationships increases with the complexity of the relationships identified among the columns of an input table. Additionally, the problems with spurious relationships are further exacerbated when the data in the input table is not "clean," but rather includes errors, typos, and so forth.

To solve these problems, a functional relationship system discussed herein provides a unified framework for inferring true-positive or semantically-accurate functional relationships between columns of an input table. For example, the functional relationship system develops principled statistical tests based on a hypothetical analysis that slightly "perturbs" values in an input table in order to determine the strength of a functional relationship candidate.

As will be described in greater detail below, the functional relationship system operates under an assumption that a functional relationship candidate will hold on an input table only "by chance." The functional relationship system then performs a slight "perturbation" of the input table. For example, the functional relationship system may modify select cells or fields of the table or specific column(s) in a variety of ways. The functional relationship system determines that a functional relationship candidate is genuine on the input table when the probability of the functional relationship candidate holding on the slightly perturbed input table is exceedingly small (e.g., below a threshold probability or score). Thus, the functional relationship system can determine that an underlying semantic relationship likely exists when the corresponding functional relationship candidate fails to hold following the perturbation. As such, the functional relationship system can reliably infer diverse types of functional relationships between columns of an input table.

As such, the functional relationship system discussed herein provides improved flexibility and accuracy over existing systems. For example, where existing systems often identify inaccurate, false-positive column relationships, the functional relationship system can infer rich and diverse inter-column relationships with a high degree of accuracy. By leveraging perturbation and statistical measurement, the functional relationship system infers true-positive column relationships that may have been lost through table combinations, data transfers, and so forth.

In one or more embodiments, the increased accuracy generated by the functional relationship system leads to additional improvements. For example, the accurate inter-column functional relationships inferred by the functional relationship system can serve as rich data-quality constraints. For example, these inter-column functional relationships can serve as data-quality constraints by data cleaning algorithms to detect and repair table data.

Furthermore, the accurate inter-column functional relationships inferred by the functional relationship system can help ensure better data consistency. For example, in spreadsheet tables, it is common for users to edit cell values, which can lead to cascading changes in dependent data cells. When such dependencies are not auto-populated and enforced, users often have to manually edit all dependent cells to maintain consistency, which is error-prone. By automatically inferring and enforcing inter-column relationships, the functional relationship system can increase the data consistency and data quality reflected by the table.

In one or more implementations, the methods and steps performed by the unsupervised error detection system reference multiple terms. For example, as used herein, an "input table" refers to a collection of data items that are organized into rows and columns.

As used herein, a "functional relationship" refers to a connection between two or more sets of data. For example, a functional relationship can exist between data items in a first column of an input table and data items in a second column of the input table. Functional relationships can indicate a connection between multiple columns of the same table and can have different types. Some non-limiting examples of functional relationships will be discussed below.

For example, functional relationships can be arithmetic relationships where the connection between the two or more columns is mathematical. Additionally, functional relationships can be string transformation relationships where the connection between the two or more columns is some type of string transformation (e.g., a concatenation, an extraction, a joining, a splitting, case conversions, etc.). Furthermore, functional relationships can be functional dependencies where the connection between the two or more columns is some type of function (e.g., a part to a whole, a zip code to a state, an occupation to a professional license). Additionally, as used herein a "functional relationship candidate" refers to a potential functional relationship identified within an input table. Functional relationship candidates may be true-positive or false-positive, but most likely functional relationship candidates are those that have probability scores indicating that they are true-positive.

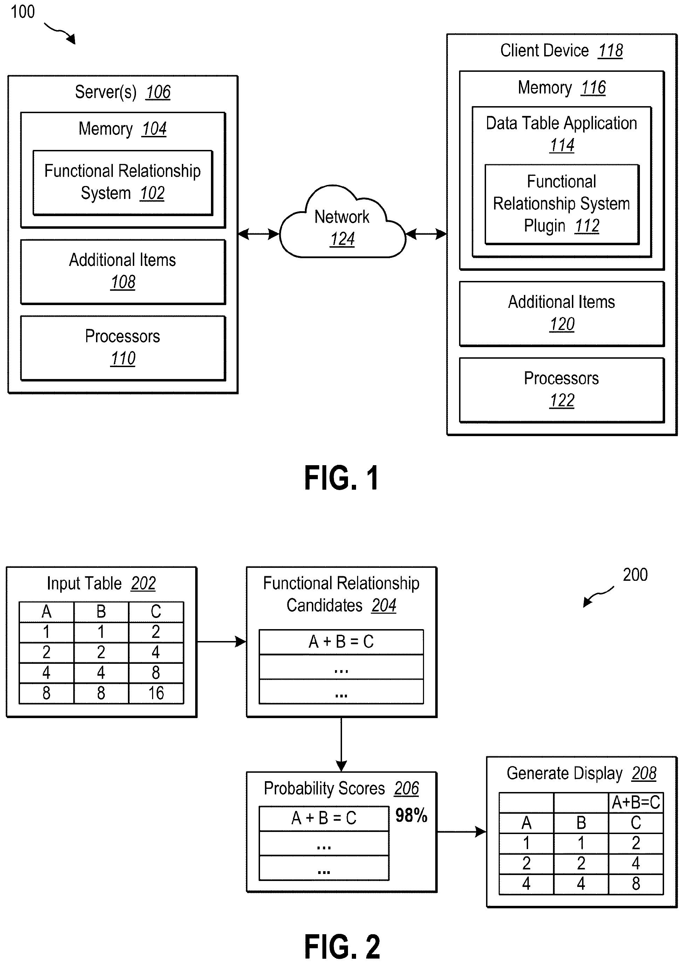

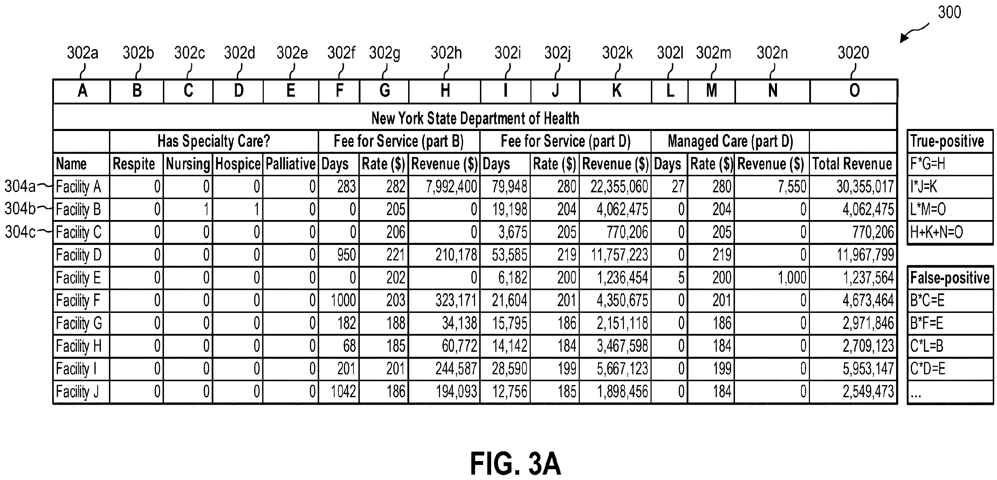

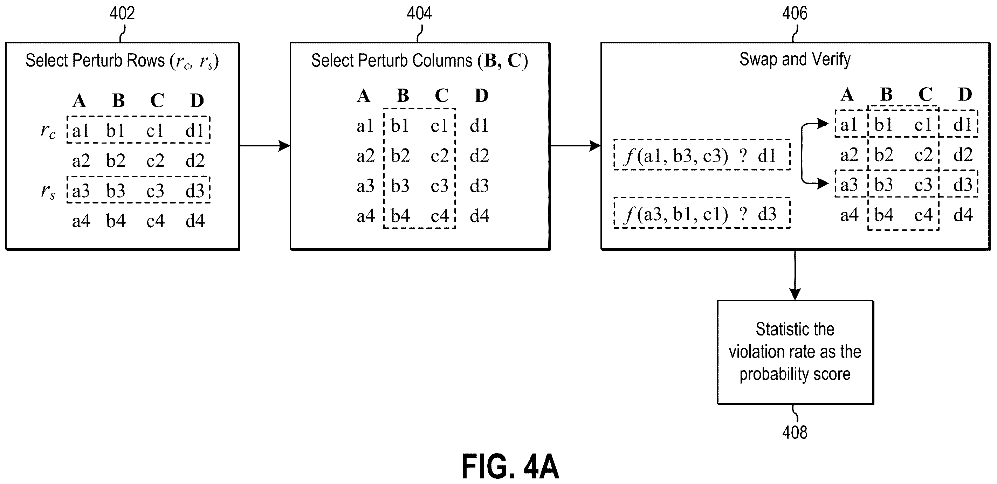

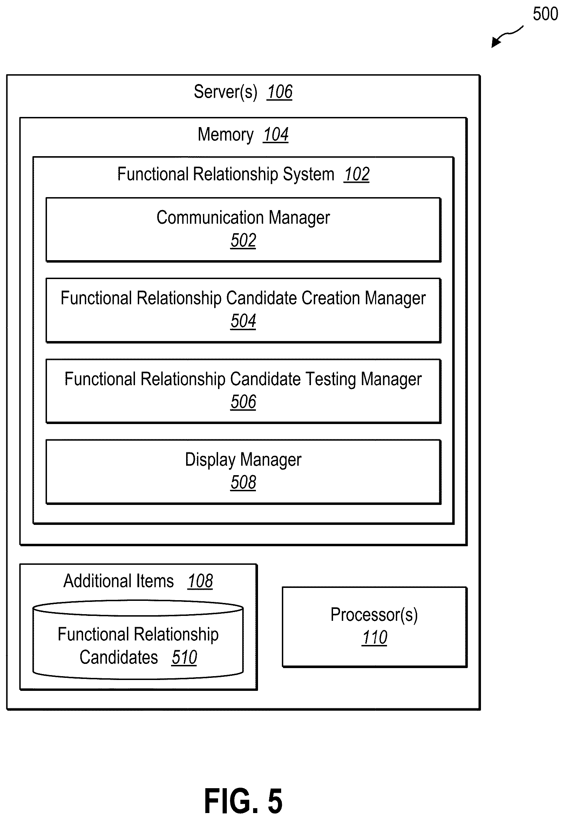

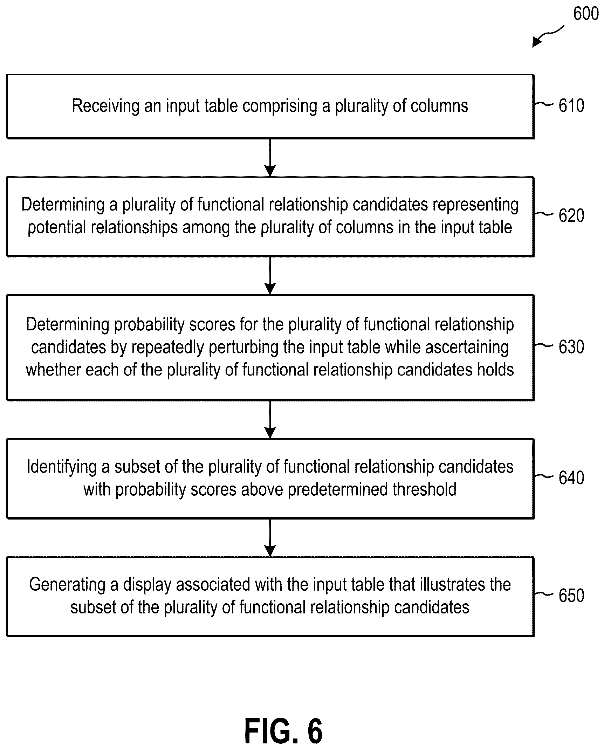

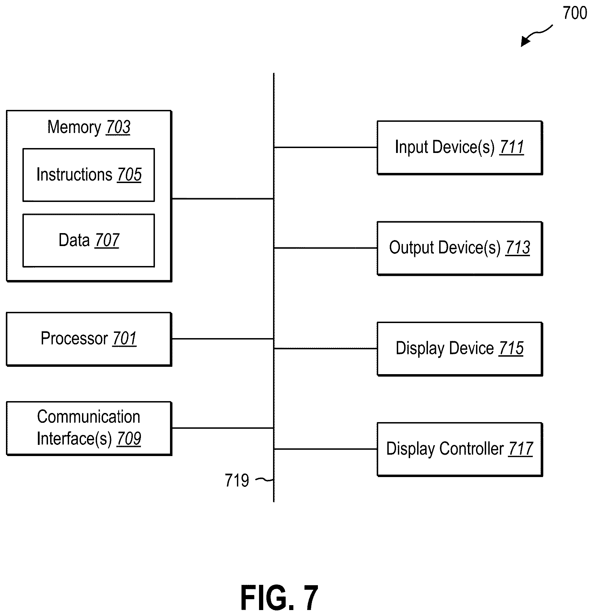

Additional details regarding example implementations of the unsupervised error detection system will now be discussed in connection with the following figures. To illustrate, FIG. 1 provides an example overview of a networked environment where the functional relationship system operates to determine functional relationships between columns of an input table. FIG. 2 illustrates steps taken by the functional relationship system to generate a set of most likely functional relationships between columns of an input table. FIGS. 3A-3C illustrate examples of different types of functional relationships that can be inferred by the functional relationship system. FIGS. 4A-4C illustrate additional detail in connection with the statistical measurements performed by the functional relationship system while inferring inter-column relationships within an input table. FIG. 5 illustrates additional detail in connection with the functional relationship system 102. Finally, FIG. 6 illustrates a series of acts for automatically inferring inter-column functional relationships, while FIG. 7 illustrates certain components that may be included within a computer system.

As just mentioned, FIG. 1 illustrates an example overview environment 100 including a functional relationship system 102 operating within a memory 104 on a server(s) 106. As further shown in FIG. 1, the functional relationship system 102 works in combination with a functional relationship system plugin 112 operating as part of a data table application 114 within a memory 116 on a client device 118. In addition to the memories 104, 116, the server(s) 106 and the client device 118 can also include additional items 108, 120, and processor(s) 110, 122, respectively.

As further shown in FIG. 1, the functional relationship system 102 and the functional relationship system plugin 112 may be communicatively coupled through the network 124. In one or more implementations, the network 124 may represent any type or form of communication network, such as the Internet, and may include one or more physical connections, such as a LAN, and/or wireless connections, such as a WAN.

Although FIG. 1 illustrates components of the environment 100 in one arrangement, other arrangements are possible. For example, in one embodiment, the functional relationship system 102 may operate as part of the data table application 114 on the client device 118. Additionally or alternatively, some of the functionality of the functional relationship system 102 may be performed by the functional relationship system plugin 112 on the client device 118. For example, in some embodiments, the functional relationship system 102 may generate a list of inferred functional relationships associated with an input table received from the functional relationship system plugin 112 and provide that list back to the functional relationship system plugin 112. At that point, the functional relationship system plugin 112 may generate a display illustrating the functional relationships indicated by the list and update an existing display of the input table to include this illustration of the functional relationships.

FIG. 2 illustrates an overview of a sequence 200 of acts performed by the functional relationship system 102 in automatically determining relationships between columns of a data table. For example, as shown in FIG. 2, the functional relationship system 102 can receive an input table in an act 202. In one or more embodiments, the functional relationship system 102 can receive the input table in any format that indicates columns and rows of data items. The data items in the input table can include alpha-numeric characters and/or strings of alpha-numeric characters.

In an act 204, the functional relationship system 102 can generate functional relationship candidates based on the input table. For example, the functional relationship system 102 can generate functional relationship candidates by identifying potential relationships among the columns of the input table. To illustrate, the functional relationship system 102 can identify potential arithmetic relationships, potential string transformation relationships, and potential functional dependency relationships among the columns of the input table. In at least one embodiment, the functional relationship system 102 identifies these functional relationship candidates by applying known arithmetic functions, string transformations, and functional dependencies to the columns of the input table. The functional relationship system 102 then determines that a functional relationship candidate is a function, transformation, and/or dependency that holds on two or more columns of the input table across a threshold number of rows of the input table (e.g., holds on at least 85% of the input table rows).

In one or more embodiments, the functional relationship system 102 operates under the assumption that functional relationship candidates hold on the input table only by chance. As such, the functional relationship system 102 performs statistical probability tests on the functional relationship candidates in an act 206 to identify the functional relationships that most likely exist among the columns of the input table. For example, and as will be discussed in greater detail below, the functional relationship system 102 identifies spurious relationships represented among the functional relationship candidates by performing tests including perturbation and minimality tests. In at least one embodiment, the functional relationship system 102 further narrows the functional relationship candidates down to a final group of candidates by identifying functional relationship candidates with probability scores that are better than a threshold score.

Finally, the functional relationship system 102 performs an act 208 of generating a display of the most likely functional relationship candidates in connection with the input table. For example, the functional relationship system 102 can generate a display including an overlay or side listing the most likely functional relationship candidates within the data table application 114. In another embodiment, the functional relationship system 102 updates or modifies the input table to indicate the most likely functional relationship candidates. For example, the functional relationship system 102 can color-code columns of the input table that correspond to a most likely functional relationship candidate. In another example, the functional relationship system 102 can add a row to the input table that indicate the most likely functional relationship candidates.

To further illustrate how functional relationships can exist between columns of a data table, FIG. 3A shows a data table 300 including data items in rows across a number of columns. For example, the data table 300 has columns 302a, 302b, 302c, 302d, 302e, 302f, 302g, 302h, 302h, 302i, 302j, 302k, 302i, 302m, 302n, and 302o. Each of the columns 302a-302o may be associated with one or more data types (e.g., numbers, characters, strings, etc.) such that data items falling under each column generally have the same data type. To further explain, data items within each of the rows 304a, 304b, 304c, and so forth are associated with nursing and rehabilitation facilities. For example, the row 304a indicates types of care and fees for the various types of care for a single facility.

Further inspection reveals that certain functional relationships exist between columns within the data table 300. For example, a number of days indicated under the column 302f for the row 304a (e.g., 283 days) multiplied by a rate per day under the column 302g for the same row 304a (e.g., $282 per day) results in the revenue data item under the column 302h for the row 304a (e.g., $7,992,400). As such, it can be said that the columns 302f, 302g, and 302h share an arithmetic relationships-denoted as column 302f multiplied by the column 302f results in the column 302h. The same relationship may be found among the columns 302i, 302j, and 302k, as well as among the columns 302i, 302m, and 302n.

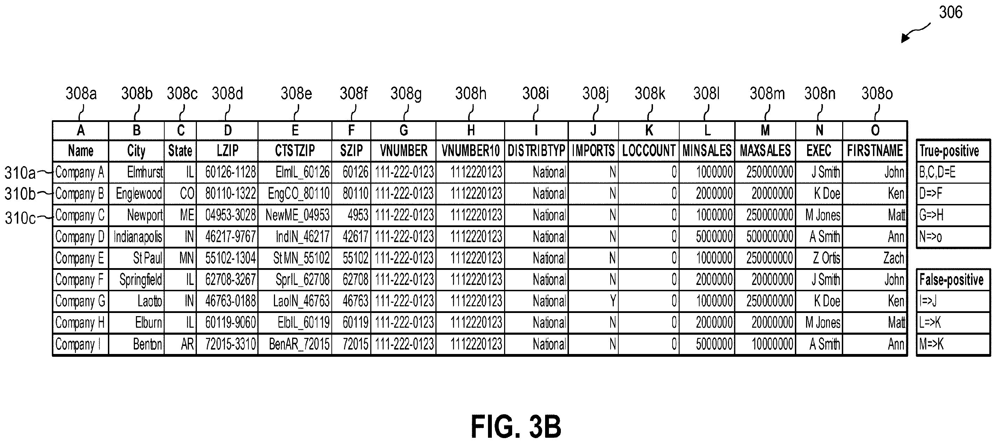

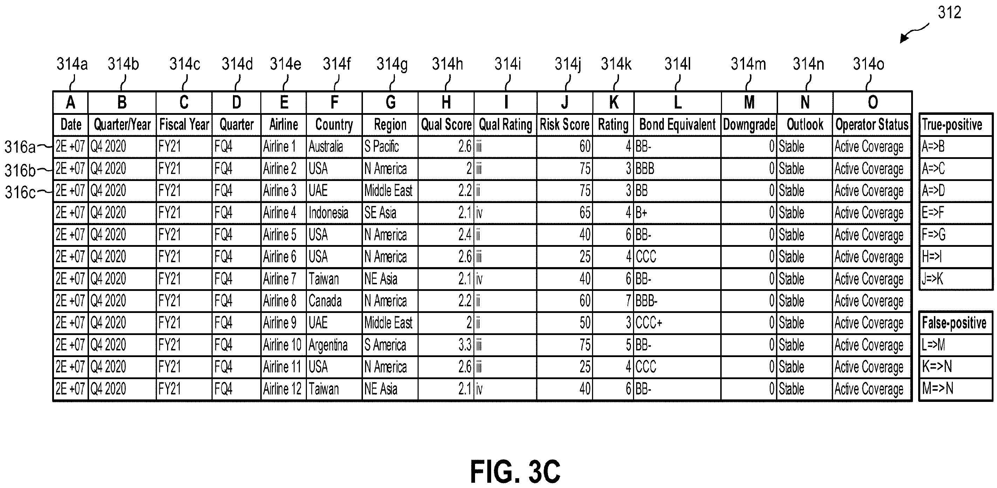

While these correct or true-positive arithmetic relationships may be intuitively apparent to a human analyst, automatic recognition of arithmetic relationships in the data table 300 may also lead to false-positive results. For example, as shown in FIG. 3, the data table 300 further includes binary (e.g., yes/no) indications of types of specialty care offered by various facilities across the columns 302b-302e. Because many of the facilities represented fail to offer any type of specialty care, automatic functional relationship recognition may result in the identification of false-positive arithmetic relationships such as the column 302b plus the column 302c plus the column 302d equals the column 302e.

Similar to the true-positive and false-positive arithmetic relationships shown in connection with the data table 300, other data tables can include different types of functional relationships. For example, as shown in FIG. 3B, a data table 306 includes data items that strings and other alpha-numeric characters. In one or more embodiments, string transformation relationships can exist between a subset of columns 308a, 308b, 308c, 308d, 308e, 308f, 308g, 308h, 308i, 308j, 308k, 308l, 308m, 308n, and 308o. To illustrate, data items under the column 308e may include a concatenation of data items from the columns 308b, 308c, and 308d. For instance, the data item in the row 310a (of rows 310a, 310b, and 310c) under the column 308e (e.g., "ElmIL_60126") is a concatenation of the data items from the same row under the column 308b (e.g., "Elmhurst"), the column 308c (e.g., "IL"), and the column 308d (e.g., "60126-1128").

As with the table 300 shown in FIG. 3A, some of the string transformation relationships that potentially exist in the data table 306 are true-positive relationships, while others are false-positive relationships. For example, as further shown in FIG. 3B, the data items under the column 308i indicate a distribution type of "National." Most of the data items under the column 308j indicate "N," which may automatically be recognized as a truncation of the word "National." The string transformation relationship of column 308j being a truncation of the column 308i, however, would be a false-positive relationship as the column 308j is actually a binary value (e.g., Yes/No) associated with whether or not the entity associated with the corresponding row imports goods.

Furthermore, data tables may include functional dependencies between columns. To illustrate, FIG. 3C shows a data table 312 including data items across multiple columns 314a-314o. In one or more embodiments, the data table 312 includes true-positive functional dependencies such as between columns 314f and 314g. For example, as shown in row 316a (of rows 316a, 316b, and 316c), a functional relationship exists between the data item in the column 314f (e.g., "Australia") and the column 314g (e.g., "South Pacific") because the country represented in the column 314f exists within the region represented in the column 314g.

In addition to the true-positive functional dependencies that exist within the data table 312, the data table 312 also includes false-positive functional dependencies. For example, the data items under the column 314m all include a value of "0." Additionally, the data items under the column 314n all include a value of "stable." In some embodiments, a system may determine that a functional dependency of "0 = stable" exists between the column 314m and the column 314n. A human operator, however, might intuitively understand that the column 314m includes a binary, yes/no indication of whether an airline has experienced a downgrade while the column 314n indicates whether the same airline's business outlook is stable. As such, these columns actually do not share a functional dependency.

As mentioned above, the functional relationship system 102 automatically determines most likely true-positive functional relationships between columns of an input table. For example, where existing systems are limited to identifying all potential relationships between columns of an input table with little to no accuracy as to whether those potential relationships are true-positive relationships or false-positive relationships, the functional relationship system 102 can identify true-positive column relationships in a manner that is highly accurate and explainable.

FIGS. 4A-4C illustrate additional detail with regard to how the functional relationship system 102 automatically determines these true-positive functional relationships. For example, FIG. 4A illustrates initial steps taken by the functional relationship system 102 in generating functional relationship candidates that represent potential functional relationships between input table columns. As mentioned above in connection with FIG. 2, the functional relationship system 102 first generates a set of functional relationship candidates for an input table by applying series of potential arithmetic formulas, string transformations, and functional relationships to the columns of the input table. If, for example, the functional relationship system 102 determines that a particular arithmetic formula holds at a threshold rate between two or more columns of the input table (e.g., holds on more than eighty percent of the data items between the two or more columns), the functional relationship system 102 can use that arithmetic formula and the two or more columns as a functional relationship candidate.

As such, the resulting set of functional relationship candidates across all possible arithmetic formulas, string transformations, and functional dependencies may be very large. Accordingly, the functional relationship system 102 can first identify a minimal subset of the total number of functional relationship candidates by utilizing a minimality test. For example, the functional relationship system 102 can identify functional relationship candidates that represent the simplest possible form. Put another way, the functional relationship system 102 identifies functional relationship candidates that involve the smallest number of input table columns while still holding true.

Once the functional relationship system 102 has identified the functional relationship candidates that satisfy the minimality test, the functional relationship system 102 next performs a perturbation test to identify functional relationship candidates that lead to true-positive results and those that lead to false-positive results. For example, as shown in FIG. 4A, the functional relationship system 102 performs the perturbation test in connection with a functional relationship candidate by first performing a step 402 of selecting two rows of the input table (or a subset of one or more columns within an input table) to serve as perturbation rows.

Next, the functional relationship system 102 continues by performing a step 404 of selecting two or more columns that participate in the functional relationship candidate to serve as perturbation columns. Following this, in a step 406, the functional relationship system 102 can swap the data items from the perturbed rows across the perturbed columns and then verify whether the functional relationship candidate still holds on the rows including the now-swapped data items. In a step 408, the functional relationship system 102 repeats the steps 402-406 and uses the rate at which the functional relationship candidate holds as the probability score for the functional relationship candidate-indicating how likely it is that the functional relationship candidate is true-positive.

To further illustrate the perturbation test, a functional relationship candidate associated with the data table 300 shown in FIG. 3A is the column 302b multiplied by the column 302c equals the column 302e. During the perturbation test on this functional relationship candidate, the functional relationship system 102 selects the rows 304a and 304b from the data table 300 as perturbation rows and uses the columns 302b and 302c as perturbation columns. The functional relationship system 102 next swaps the data items from the columns 302b, 302c across the rows 304a, 304b. Thus, the functional relationship system 102 now determines whether "0" (e.g., the data item from the row 304b and column 302b) times "1" (e.g., the data item from the row 304b and column 302c) equals "0" (e.g., the data item from the row 304a and column 302e). Similarly, the functional relationship system 102 determines whether "0" (e.g., the data item from the row 304a and column 302b) times "0" (e.g., the data item from the row 304a and column 302c) equals "0" (e.g., the data item from the row 304b and column 302e). The functional relationship system 102 can then repeat these steps for additional rows in the data table 300 using the same functional relationship candidate.

The functional relationship system 102 can determine that this functional relationship candidate holds following these perturbation steps for a threshold number of rows in the data table 300. In one or more embodiments, the functional relationship system 102 operates under an assumption that true-positive functional relationship candidates will largely fail the perturbation test. As such, upon determining that the functional relationship candidate including the column 302b multiplied by the column 302c equals the column 302e largely passes the perturbation test, the functional relationship system 102 can determine that this functional relationship candidate is a false-positive functional relationship candidate and should not be considered further. As will be discussed further below in connection with FIG. 5, the functional relationship system 102 can perform these same perturbation test steps in connection with arithmetic functional relationship candidates, string transformation functional relationship candidates, and functional dependency functional relationship candidates.

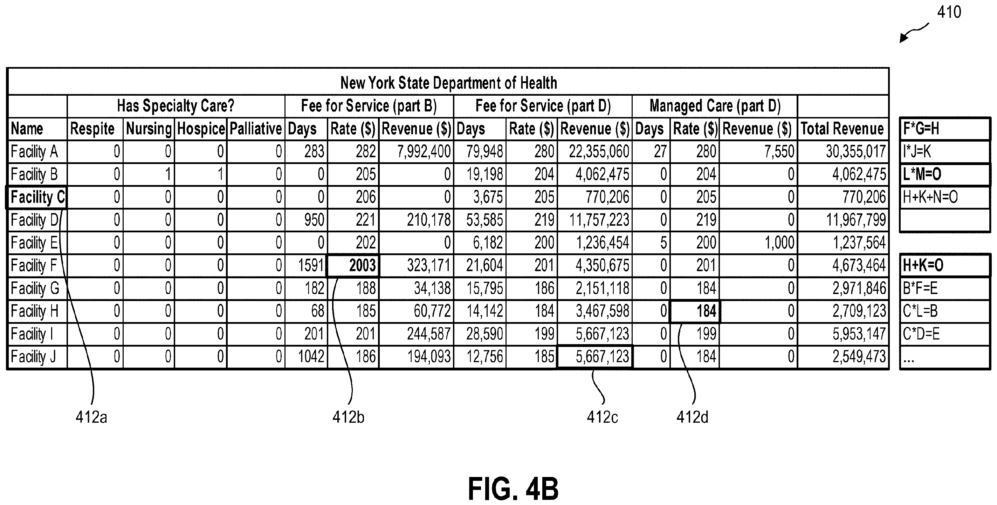

In one or more embodiments, the functional relationship system 102 can identify true-positive functional relationship candidates in connection with "clean" data sets (e.g., error-free data sets) as well as in connection with "dirty" or "noisy" data sets (e.g., data sets with mistakes, typos, etc.). In real-world data sets, noise can be introduced through data collection processes, human input errors, and inconsistencies during data integration. To illustrate, in FIG. 4B, the table 410 includes noisy data such as the data items 412c and 412d (e.g., may include duplicates), the data item 412a (e.g., may include a typo), and the data item 412b (e.g., may include an outlier compared to other data items in the same column).

To handle "dirty" data, the functional relationship system 102 can apply an independence test to filter non-independent functional relationship candidates in the presence of noise. In one or more embodiments, the functional relationship system 102 operates under the assumption that a non-independent functional relationship candidate is also unreliable (i.e., a false-positive functional relationship candidate).

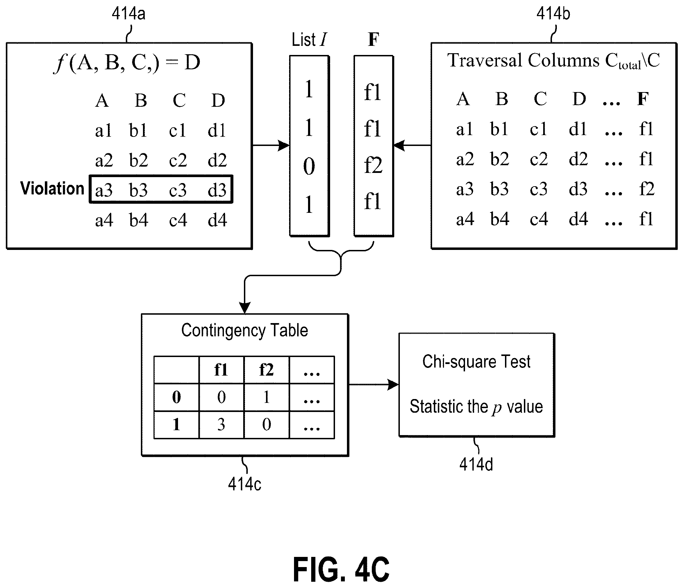

FIG. 4C illustrates steps taken by the functional relationship system 102 in performing the independence test in connection with a functional relationship candidate. For example, in a step 414a, the functional relationship system 102 can construct a list representing the validity of the functional relationship candidate for each row in the input table (e.g., using 0 for invalid and 1 for valid). Following this, in a step 414b, the functional relationship system 102 can traverse every column in the input table that is not part of the functional relationship candidate.

In a step 414c, the functional relationship system 102 can create a contingency table between the traversed columns and the list of validity data previously constructed. Finally, in a step 414d, the functional relationship system 102 can apply the Chi-Square test on the contingency table to assess the independence between the traversed columns and the list of validity data. In one or more embodiments, the functional relationship system 102 utilizes the results of the Chi-Square test to filter out the functional relationship candidate if any traversed column (e.g., a column not included in the functional relationship candidate) is dependent on the list of validity data. Conversely, if no traversed column is dependent on the list of validity data, the functional relationship system 102 can determine that the functional relationship candidate passes the independence test and can move forward through the perturbation test. Additional detail with regard to the independence test is given below in connection with FIG. 5.

As mentioned above, and as shown in FIG. 5, the functional relationship system 102 accurately infers inter-column relationships for an input table. For example, the inter-column relationships inferred by the functional relationship system 102 extend to arithmetic relationships, string transformation relationships, and functional dependency relationships. FIG. 5 is a block diagram 500 of the functional relationship system 102 operating within the memory 104 of the server(s) 106. As such, FIG. 5 provides additional detail with regard to the functions performed by the functional relationship system 102. For example, as shown in FIG. 5, the functional relationship system 102 can include a communication manager 502, a functional relationship candidate creation manager 504, a functional relationship candidate testing manager 506, and a display manager 508.

In certain implementations, the functional relationship system 102 may represent one or more software applications, modules, or programs that, when executed by a computing device, may cause the computing device to perform one or more tasks. For example, and as will be described in greater detail below, one or more of the communication manager 502, the functional relationship candidate creation manager 504, the functional relationship candidate testing manager 506, and the display manager 508 may represent software stored and configured to run on one or more computing devices, such as the server(s) 106. Any of the communication manager 502, the functional relationship candidate creation manager 504, the functional relationship candidate testing manager 506, and the display manager 508 shown in FIG. 5 may also represent all or portions of one or more special purpose computers to perform one or more operations.

As mentioned above, and as shown in FIG. 5, the functional relationship system 102 includes the communication manager 502. In one or more embodiments, the communication manager 502 handles communication tasks between the functional relationship system 102 and the other devices illustrated in the overview environment 100 (e.g., as shown in FIG. 1). For example, the communication manager 502 can detect or receive indications of a selected input table. To illustrate, the communication manager 502 can detect a user selection of an input table within the data table application 114 on the client device 118. Similarly, the communication manager 502 can receive an input table selected via the data table application 114 on the client device 118 and transmitted via the network 124. Additionally, in some embodiments, the communication manager 502 can look up a input table within a cloud-based repository in response to detecting a user indication of the input table via the data table application 114 on the client device 118.

Additionally, the communication manager 502 can further transmit display instructions to the data table application 114 on the client device 118. For example, additional components of the functional relationship system 102 can inferred one or more functional relationships between table columns of the input table and generate display instructions based on these inferred functional relationships. In one or more embodiments, the communication manager 502 can transmit such display instructions to the data table application 114 that cause the data table application 114 to generate or update a display associated with the input table to indicate the inferred functional relationships.

As mentioned above, and as shown in FIG. 5, the functional relationship system 102 includes the functional relationship candidate creation manager 504. In one or more embodiments, the functional relationship candidate creation manager 504 generates a set of functional relationship candidates for an input table received by the communication manager 502. For example, the functional relationship candidate creation manager 504 can discover functional relationship candidates by applying known arithmetic functions, string-transformations, and functional dependencies to the columns of the input table to identify which functions, transformations, and dependencies hold on the columns of the input table.

In more detail, a functional relationship candidate can refer to a mapping between different columns in tabular data that illustrates how input values (one or more columns in the data) are transformed into output values (other columns). A formal definition of a functional relationship candidate can include the following:
*Given a table T with a set of columns C, column subsets X, Y* ⊆ *C. A Functional Relationship* Ψ*_{Y} = (X, fᵣ*) *is composed of input columns set X, output columns set Y and a mapping function fᵣ.*

In one or more embodiments, the functional relationship candidate creation manager 504 considers *V(X), V(Y)* as the domains of *X, Y,* respectively. For all *x* ∈ *V(X)* and y ∈ *V(Y),* the functional relationship candidate creation manager 504 determines that a functional relationship candidate holds if; $p \left(\left.Y=y\right|X=x\right) = \left\{\begin{matrix}1 , & if y = {f}_{r} \left(x\right) \\ 0 , & otherwise\end{matrix}\right.$

A functional relationship candidate Ψ*_{Y}* = (*X, fᵣ*) is said to be non-trivial if *Y* ⊊ *X.* A functional relationship candidate is said to be normalized if the output columns set has a single column. The functional relationship candidate creation manager 504 considers *C*_{Ψ} *= X* ∪ *Y* as the participative columns set of the functional relationship candidate Ψ. For two functional relationship candidates Ψ₁ and Ψ₂, if *C*_{ψ1} = *C*_{Ψ2}, then Ψ₁ and Ψ₂ are said to be isomerous. In one or more embodiments, the functional relationship candidate creation manager 504 considers only the set of non-trivial, normalized functional relationship candidates as that set can be used to infer all other functional relationship candidates that hold on the input table (*T*).

When input and output columns for a functional relationship candidate are numeric data, the functional relationship candidate creation manager 504 can determine that the functional relationship candidate is an arithmetic relationship (e.g., addition, subtraction, multiplication, division). When input and output columns for a functional relationship candidate are textual data, the functional relationship candidate creation manager 504 an determine that the functional relationship candidate is a string transformation (e.g., split, substring, concatenate). In one or more embodiments, the functional relationship candidate creation manager 504 can utilize functional dependencies to describe functional relationship candidates that involve categorical data. For example, a functional relationship candidate that includes a functional dependency can involve both numeric and textual data.

As mentioned above, and as shown in FIG. 5, the functional relationship system 102 includes the functional relationship candidate testing manager 506. In one or more embodiments, the functional relationship candidate testing manager 506 measures each of the functional relationship candidates generated by the functional relationship candidate creation manager 504 for the input table. For example, the functional relationship candidate testing manager 506 can utilize these measurements to identify a subset of the functional relationship candidates representing most-likely inter-column relationships for the input table.

In at least one embodiment, the functional relationship candidate testing manager 506 can determine measurements on clean data (e.g., input table data with no noise or errors). Under this scenario, the functional relationship candidate testing manager 506 can assume that each functional relationship candidate in the set of functional relationship candidates (*R*_{Ψ}) holds on all rows of the input table. Under the clean data assumption, the functional relationship candidate testing manager 506 can identify most-likely functional relationship candidates for the input table by performing a minimality test followed by a perturbation test on each functional relationship candidate identified on the input table.

In one or more embodiments, the functional relationship candidate testing manager 506 performs the minimality test to identify a set of functional relationship candidates that represent the minimal subset of functional relationship candidates for the input table. For example, the functional relationship candidate testing manager 506 considers a functional relationship candidate Ψ with a participative column set *C*_{Ψ}. If there exists a functional relationship candidate Ψ' with participative column set *C*_{Ψ'}, and *C*_{Ψ'} ⊆ *C*_{Ψ}, the functional relationship candidate testing manager 506 utilizes the minimality test to filter out Ψ. If no such Ψ' exists, the functional relationship candidate testing manager 506 can determine that Ψ passes the minimality test.

To illustrate, as shown in FIG. 3A, a functional relationship candidate for the data table 300 (e.g., *H)* can include Ψ*_{H}* = *({F, G, B}, F * G + B)* (e.g., for the columns F = column 302f, G = column 302g, and B = column 302b). In one or more embodiments, the functional relationship candidate testing manager 506 can decompose this functional relationship candidate into Ψ*_{H}* = *({F, G}, F ** G) because the column 302b consists entirely of zeros. As such, the functional relationship candidate testing manager 506 can set minimality test scores (*p*) to l to filter out the redundant functional relationship candidates. The functional relationship candidate testing manager 506 can determine that functional relationship candidates with *p* < 1 have passed the minimality test.

Next, the functional relationship candidate testing manager 506 performs the perturbation test on functional relationship candidates that have passed the minimality test to determine most-likely inter-column relationships within an input table. In one or more embodiments, the functional relationship candidate testing manager 506 assumes that the absence of violations in a functional relationship candidate is due to the data distribution. Therefore, the functional relationship candidate testing manager 506 perturbs the data and observes the probability of violations in the functional relationship candidate as the p-value (i.e., *p).*

In one or more embodiments, the functional relationship candidate testing manager 506 performs the perturbation test by selecting two rows from the input table (*T*), denoted as *r_{c}* and *rₛ* to serve as perturbation rows. Next, the functional relationship candidate testing manager 506 selects a subset from the columns that participate in the functional relationship candidate, denoted as *C',* to serve as the perturbation columns. Following this, the functional relationship candidate testing manager 506 swaps the perturb columns of the perturb rows to get *r'_{c}* and *r'ₛ,* and verifies whether the functional relationship candidate still holds on the two swapped rows. Finally, the functional relationship candidate testing manager 506 repeats these steps with the remaining rows of the input table (*T*) and uses the probability that the functional relationship candidate holds on the remaining rows as the probability score (p).

In one or more embodiments, the functional relationship candidate testing manager 506 can perform the perturbation test under a naive version or a rapid version. For example, the functional relationship candidate testing manager 506 can naively perform the perturbation test by perturbing all rows in the input table to determine probability score reflecting how well the functional relationship candidate holds on the input table. This, however, may lead to a running time that grows exponentially with the number of columns involved in the functional relationship candidate.

Thus, to save time and computing resources, the functional relationship candidate testing manager 506 can perform the perturbation test under a rapid version. In one or more embodiments, the functional relationship candidate testing manager 506 determines the probability score for the perturbation rows and perturbation columns until the upper or lower bound of *p* reaches a significance level α.

Regardless of whether the functional relationship candidate testing manager 506 performs the perturbation test under the naive version or the rapid version, the functional relationship candidate testing manager 506 can generate probability scores for different types of functional relationship candidates. For example, the functional relationship candidate testing manager 506 performs the perturbation test to determine probability scores for arithmetic functional relationship candidates. To illustrate, an arithmetic functional relationship candidate shown in connection with the data table 300 in FIG. 3A includes Ψ*_{H}* = *({F, G}, F ** G) consists of three columns *F, G,* and *H* (e.g., the columns 302f, 302g, and 302h), each of which has multiple elements in the domain.

When applying perturbation test to this three-column relationship, perturbing one column and perturbing two columns have the same effect. As such, the arithmetic functional relationship candidate Ψ*_{H}* does not violate only if the functional relationship candidate testing manager 506 selects the same value for swapping or if both columns 302f and 302h are equal to zero. In one or more embodiments, the functional relationship candidate testing manager 506 can determine that the arithmetic functional relationship candidate Ψ*_{H}* = *({F, G}, F * G)* is reliable if the *p* of Ψ*_{H}* = *({F, G}, F * G)* is within the significance level α (e.g., set to a default level of 0.5).

Additionally, the functional relationship candidate testing manager 506 can perform the perturbation test in connection with string transformation functional relationship candidates. For example, a string transformation functional relationship candidate shown above in connection with the data table 306 in FIG. 3B can include Ψ*_{E}* = *({B, C, D}, concatenate (B, C, D)).* For each column affected by this string transformation functional relationship candidate, the functional relationship candidate only holds if the perturbation results in the same value. In one or more embodiments, the functional relationship candidate testing manager 506 can determine that the *p* of Ψ*_{E}* = *({B, C, D}, concatenate (B, C, D))* is 0.06, suggesting that this functional relationship candidate is likely reliable. The functional relationship candidate testing manager 506 can determine that a functional relationship candidate is not reliable when p = 1-indicating that when columns are perturbed the functional relationship candidate always holds.

Moreover, the functional relationship candidate testing manager 506 can perform the perturbation test in connection with functional dependency functional relationship candidates. For example, a functional dependency functional relationship candidate discussed above in connection with the data table 312 in FIG. 3C includes Ψ*_{B}* = *({A}, A* → *B).* In one or more embodiments, the functional relationship candidate testing manager 506 can determine that the *p* of Ψ*_{B}* = *({A},A* → *B)* is 0.02 (e.g., where *A* is the column 314a and B is the column 314b). As such, the functional relationship candidate testing manager 506 can determine that Ψ*_{B}* = *({A}, A* → *B)* is reliable because *p* = 0.02 is within the significance level α.

As mentioned above, the functional relationship candidate testing manager 506 can perform the minimality and perturbation tests on clean data within input tables. To account for errors in the data of an input table (e.g., due to human input errors, inconsistencies during data integration, etc.), the functional relationship candidate testing manager 506 can also determine likelihood probabilities for inter-column relationships found among "dirty" or noisy data. As discussed above in connection with FIG. 4B, it is unbefitting to require a functional relationship candidate to hold for every row if the input table includes dirty or noisy data.

Instead, the functional relationship candidate testing manager 506 can utilize approximate functional relationship candidates. In one or more embodiments, the functional relationship candidate testing manager 506 defines an approximate functional relationship candidate as follows:
*Given a Table T with a set of columns* C, *column subsets X, Y* ⊆ *C, and a threshold α* ∈ [0,1]. An *α functional relationship* (*α FR)is an approximate FR such that the proportion of rows in T that violate* Ψ*_{Y} =* (*X, fᵣ*) *is less than a. In other words, the α FR* Ψ*_{Y} =* (*X, fᵣ*) *holds for at least (1 - α*) × 100% *of the rows in T.*

In one or more embodiments, the functional relationship candidate testing manager 506 further accounts for the inaccuracies produced by noisy data by adding an additional preprocessing step of performing an independence test. For example, the functional relationship candidate testing manager 506 can perform the independence test before the perturbation test on "dirty" data to filter out non-independent functional relationship candidates in the presence of noise. The functional relationship candidate testing manager 506 can consider that non-independent functional relationship candidates are also unreliable functional relationship candidates.

In at least one embodiment, the functional relationship candidate testing manager 506 performs the independence test by performing four steps:
1) Construct a list *I* representing the validity of the functional relationship candidate Ψ for each row, using 0 for invalid and 1 for valid.
2) Traverse every column c' not in *C*_{Ψ}.
3) For each column c', create a contingency table between c' and *I*.
4) Apply the Chi-Square test on the contingency table to assess the independence between c' and *I*.
In one or more embodiments, the functional relationship candidate testing manager 506 uses the independence test to filter out the functional relationship candidate Ψ if any column *c*' is dependent on *I*. Conversely, if no columns are dependent on *I,* the functional relationship candidate Ψ passes the independence test.

The Chi-Square test, also know as the *X²* is a statistical method used to determine if there is a significant association between categorical variables. For example, the Chi-Square test of independence assesses whether two categorical variables are independent or related. To determine the association between categorical variables using the p-value from a Chi-Square test, the functional relationship candidate testing manager 506 can first set the hypotheses with the null hypothesis (*H₀*) stating that the variables are independent and the alternative hypothesis (*H₁*) stating that they are not. The functional relationship candidate testing manager 506 can then calculate the Chi-Square statistic using the formula: ${X}^{2} = \sum \frac{{\left({O}_{ij}-{E}_{ij}\right)}^{2}}{{E}_{ij}}$ Where *Oᵢⱼ* is the observed frequency and *Eᵢⱼ* is the expected frequency. The functional relationship candidate testing manager 506 can determine the degrees of freedom as (r - 1) × (c - 1), where r and c are the number of rows and columns, respectively.

Additionally, the functional relationship candidate testing manager 506 can find the *p*-value using the Chi-Square distribution: $p - value = P \left(\left.{X}^{2}\geq {X}_{obs}^{2}\right|df\right)$ The functional relationship candidate testing manager 506 compares the p-value to the significance level *α*. If the p-value is less than or equal to α, the functional relationship candidate testing manager 506 can reject the null hypothesis-indicating a significant association. If the p-value is greater than *α*, the functional relationship candidate testing manager 506 may not reject the null hypothesis-indicating no significant association.

As mentioned above, the functional relationship candidate testing manager 506 can perform the perturbation test under a naive version or a rapid version. For example, under the naïve version, the functional relationship candidate testing manager 506 enumerates all combinations of rows and columns. Under the rapid version, the functional relationship candidate testing manager 506 randomly selects perturbation columns and perturbation rows each time. As such, under the rapid version, time costs are determined by the number of random selections, which the functional relationship candidate testing manager 506 can control even with large datasets.

In one or more embodiments, the functional relationship candidate testing manager 506 can further accelerate the rapid version of the perturbation test. For example, in one embodiment, the functional relationship candidate testing manager 506 can perform a closed form speed-up. To illustrate, the functional relationship candidate testing manager 506 can store arithmetic functional relationship candidates as expression trees. In at least one embodiment, if the perturbed columns are precisely the left and right children of a binary tree, the result of this binary tree is referred to as the perturbation core. By observing whether the perturbation core changes, the functional relationship candidate testing manager 506 can decide if the arithmetic functional relationship candidate remains valid after perturbation.

Additionally or alternatively, the functional relationship candidate testing manager 506 can leverage a partition bound. To illustrate, during a perturbation test, if the perturbed columns within the perturbed rows remain identical, the post-swap functional relationship candidate will inevitably hold. By leveraging this characteristic, the functional relationship candidate testing manager 506 can set a partition bound to estimate the lower bound of *p* for the functional relationship candidate. Specifically, when there is only one column in the perturbation columns, the functional relationship candidate testing manager 506 counts the occurrence of each value in this column and calculates the probability of each value being selected for itself during a swap. When there are multiple columns in the perturbation columns, the functional relationship candidate testing manager 506 computes the occurrence of their "joint values" (e.g., concatenation of the values across these columns) to determine the probability of selecting the same joint value during a swap. In at least one embodiment, the partition bound serves as only the lower bound for the p for the functional relationship candidate because the functional relationship candidate may still hold during a perturbation test even if the swapped values are not identical. By assessing this lower bound against a threshold before conducting a perturbation test, the functional relationship candidate testing manager 506 can bypass those functional relationship candidates that clearly do not meet the criteria.

Additionally or alternatively, the functional relationship candidate testing manager 506 can leverage a binomial bound to determine when a perturbation test under the rapid version should be terminated. During the perturbation test under the rapid version (e.g., random sampling), the functional relationship candidate testing manager 506 repeatedly samples perturbation rows and verifies whether the functional relationship candidate holds after swapping the perturbation columns. Each perturbation yields only two possible outcomes: the functional relationship candidate holds (denoted by 1) or does not hold (denoted by 0). Moreover, each "sampling and verifying" procedure is independent of the others. If the likelihood score for the functional relationship candidate from the perturbation test under the naïve version (e.g., enumeration) is defined as p, then the likelihood score for the functional relationship candidate from the perturbation test under the rapid version (e.g., random sampling) can be seen as an estimation of *p*, denoted as *p̃.* After conducting *n* "sampling and verifying" procedures, the random variable *nₛ* represents the number of times the functional relationship candidate holds, with *nₛ*'s probability distribution being a binomial distribution, denoted as *B(n, p).* Utilizing the Wilson confidence interval, the functional relationship candidate testing manager 506 can estimate the upper and lower bounds of *p* as follows: $Lower Bound = \frac{{n}_{s} + \frac{{z}^{2}}{2}}{n + {z}^{2}} - z \sqrt{\frac{{n}_{s} ⋅ \left(n-{n}_{s}\right) + \frac{{z}^{2}}{4}}{n + {z}^{2}}}$ $Upper Bound = \frac{{n}_{s} + \frac{{z}^{2}}{2}}{n + {z}^{2}} + z \sqrt{\frac{{n}_{s} ⋅ \left(n-{n}_{s}\right) + \frac{{z}^{2}}{4}}{n + {z}^{2}}}$

Here, z is the critical value from the standard normal distribution, correlating to the required confidence level. For instance, at a 95% confidence level, z is approximately 1.96. Assuming that 1000 "sampling and verifying" processes were conducted, with the functional relationship holding in 900 instances, the upper bound would be 0.92 and the lower bound 0.88. Therefore, the functional relationship candidate testing manager 506 can be 95% certain that *p* falls between 0.88 and 0.92.

As mentioned above, and as shown in FIG. 5, the functional relationship system 102 includes the display manager 508. In one or more embodiments, the display manager 508 generates displays or instructions that cause the client device 118 to generate displays in connection with most likely functional relationship candidates for inter-column relationships within an input table. For example, once the functional relationship candidate testing manager 506 determines a set of most likely functional relationship candidates for columns of an input table, the display manager 508 can generate displays that indicate those most likely functional relationship candidates.

In one embodiment, the display manager 508 can generate a display that includes an overlay, pop-up window, or side panel display that includes a listing of the most likely functional relationship candidates. The display manager 508 can cause the data table application 114 (e.g., via the functional relationship system plugin 112) to display the overlay, pop-up window, or side panel display adjacent to the input table displayed by the data table application 114.

In an additional embodiment, the display manager 508 can update a display of the input table or the input table itself to indicate the most likely functional relationship candidates. For example, the display manager 508 can update the input table by adding a new row to the input table that illustrates the most likely functional relationship candidates. To illustrate, if a most likely functional relationship candidate for an input table includes A + B = C, the display manager 508 can update the input table with an additional row at the top of the input table and can further insert "A+B=C" into the additional row under column "C." Thus, a user can see quickly within the updated input table that column "C" is the sum of columns "A" and "B."

In additional embodiments, the display manager 508 can update the input table in other ways to indicate most likely functional relationship candidates. For example, the display manager 508 can add a color to columns within the input table that are part of the same functional relationship candidate. Similarly, the display manager 508 can add borders, animations, or other annotations to columns within the input table that are part of the same functional relationship candidate.

As further shown in FIG. 5, the server(s) 106 can include additional items 108. In one or more embodiments, the additional items 108 can include functional relationship candidates 510. For example, the functional relationship system 102 can store functional relationship candidates 510 that are commonly found across multiple input tables (e.g., "First Name" concatenated with "Last Name" becomes "Full Name"). As such, in some embodiments, the functional relationship system 102 can utilize the functional relationship candidates 510 to further increase the speed of the functional relationship candidate generation and measurement process.

In one or more embodiments, the server(s) 106 includes the memory 104 and the processors 110. For example, the memory 104 (and the memory 116 of the client device 118 shown in FIG. 1) can generally represent any type or form of volatile or non-volatile storage device or medium capable of storing data and/or computer-readable instructions. In one example, the memory 104 (and the memory 116) may store, load, and/or maintain one or more components of the functional relationship system 102. Examples of the memory can include, without limitation, Random Access Memory (RAM), Read Only Memory (ROM), flash memory, Hard Disk Drives(HDDs), Solid-State Drives (SSDs), optical disk drives, caches, variations or combinations of one or more of the same, and/or any other suitable storage memory.

Additionally, the processors 110 (and the processor 122 of the client device 118 as shown in FIG. 1) can generally represent any type or form of hardware-implemented processing units capable of interpreting and/or executing computer-readable instructions. In one implementation, the processors 110 (and the processors 122) may access and/or modify one or more components of the functional relationship system 102. Examples of the processors 110, 122 include, without limitation, microprocessors, microcontrollers, Central Processing Units (CPUs), Field-Programmable Gate Arrays(FPGAs) that implement softcore processors, Application-Specific Integrated Circuits(ASICs), portions of one or more of the same, variations or combinations of one or more of the same, and/or any other suitable physical processor.

As mentioned above, FIG. 6 illustrates an example series of acts 600 related to automatically inferring functional relationships between table columns. While FIG. 6 illustrates acts according to one or more embodiments, alternative embodiments may omit, add to, reorder, and/or modify any of the acts shown in FIG. 6. The acts of FIG. 6 can be performed as part of a method. Alternatively, a non-transitory computer-readable medium can include instructions that, when executed by one or more processors, cause a computing device to perform the acts of FIG. 6. In still further embodiments, a system can perform the acts of FIG. 6.

As illustrated in FIG. 6, the series of acts 600 includes an act 610 of receiving an input table comprising a plurality of columns. For example, receiving the input table can include receiving a copy of the input table, receiving a memory address of the input table stored in a secondary location, or receiving a link to the input table stored in cloud storage.

As further shown in FIG. 6, the series of acts 600 includes an act 620 of determining a plurality of functional relationship candidates representing potential relationships among the plurality of columns in the input table. For example, determining the plurality of functional relationship candidates representing potential relationships among the plurality of columns in the input table can include identifying sets of two or more columns wherein a threshold number of values within each of the two or more columns satisfy a functional relationship. In one or more embodiments, the functional relationship can include at least one of an arithmetic relationship, a string transformation relationship, or a functional dependency relationship.

As further shown in FIG. 6, the series of acts 600 includes an act 630 of determining probability scores for the plurality of functional relationship candidates by perturbing the input table and ascertaining whether each of the plurality of functional relationship candidates holds. For example, determining probability scores for the plurality of functional relationship candidates can include, for each of the plurality of functional relationship candidates, repeatedly perturbing the input table, applying the functional relationship candidate to the input table following each perturbation, and determining a probability score for the functional relationship candidate following each perturbation based on whether the functional relationship candidate holds on the input table following the perturbation.

In one or more embodiments, the series of acts 600 further includes, prior to determining the probability scores for the plurality of functional relationship candidates, removing functional relationship candidates from the plurality of functional relationship candidates that fail to pass a minimality test. Additionally, in some embodiments, ascertaining whether each of the plurality of functional relationship candidates holds is in connection with a threshold number of rows within the input table, wherein the threshold number of rows is less than a total number of rows within the input table.

As further shown in FIG. 6, the series of acts 600 includes an act 640 of identifying a subset of the plurality of functional relationship candidates with probability scores above predetermined threshold. For example, identifying the subset of the plurality of functional relationship candidates can further include identifying functional relationship candidates with probability scores within an upper bound and a lower bound.

As further shown in FIG. 6, the series of acts 600 includes an act 650 of generating a display associated with the input table that illustrates the subset of the plurality of functional relationship candidates. For example, generating the display associated with the input table that illustrates the subset of the plurality of functional relationship candidates can include generating a new row within the input table that illustrates the subset of the plurality of functional relationship candidates in association with input table columns involved in each of the subset of the plurality of functional relationship candidates.

FIG. 7 illustrates certain components that may be included within a computer system 700. One or more computer systems 700 may be used to implement the various devices, components, and systems described herein.

The computer system 700 includes a processor 701. The processor 701 may be a general-purpose single- or multi-chip microprocessor (e.g., an Advanced RISC (Reduced Instruction Set Computer) Machine (ARM)), a special purpose microprocessor (e.g., a digital signal processor (DSP)), a microcontroller, a programmable gate array, etc. The processor 701 may be referred to as a central processing unit (CPU). Although just a single processor 701 is shown in the computer system 700 of FIG. 7, in an alternative configuration, a combination of processors (e.g., an ARM and DSP) could be used.

The computer system 700 also includes memory 703 in electronic communication with the processor 701. The memory 703 may be any electronic component capable of storing electronic information. For example, the memory 703 may be embodied as random-access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM) memory, registers, and so forth, including combinations thereof.

Instructions 705 and data 707 may be stored in the memory 703. The instructions 705 may be executable by the processor 701 to implement some or all of the functionality disclosed herein. Executing the instructions 705 may involve the use of the data 707 that is stored in the memory 703. Any of the various examples of modules and components described herein may be implemented, partially or wholly, as instructions 705 stored in memory 703 and executed by the processor 701. Any of the various examples of data described herein may be among the data 707 that is stored in memory 703 and used during execution of the instructions 705 by the processor 701.

A computer system 700 may also include one or more communication interfaces 709 for communicating with other electronic devices. The communication interface(s) 709 may be based on wired communication technology, wireless communication technology, or both. Some examples of communication interfaces 709 include a Universal Serial Bus (USB), an Ethernet adapter, a wireless adapter that operates in accordance with an Institute of Electrical and Electronics Engineers (IEEE) 802.11 wireless communication protocol, a Bluetooth^{®} wireless communication adapter, and an infrared (IR) communication port.

A computer system 700 may also include one or more input devices 711 and one or more output devices 713. Some examples of input devices 711 include a keyboard, mouse, microphone, remote control device, button, joystick, trackball, touchpad, and lightpen. Some examples of output devices 713 include a speaker and a printer. One specific type of output device that is typically included in a computer system 700 is a display device 715. Display devices 715 used with embodiments disclosed herein may utilize any suitable image projection technology, such as liquid crystal display (LCD), light-emitting diode (LED), gas plasma, electroluminescence, or the like. A display controller 717 may also be provided, for converting data 707 stored in the memory 703 into text, graphics, and/or moving images (as appropriate) shown on the display device 715.

The various components of the computer system 700 may be coupled together by one or more buses, which may include a power bus, a control signal bus, a status signal bus, a data bus, etc. For the sake of clarity, the various buses are illustrated in FIG. 7 as a bus system 719.

Alternatively or in addition to the other examples described herein, examples include any combination of the following clauses:
Clause A. A method for automatically inferring functional relationships between table columns comprising: receiving an input table comprising a plurality of columns; determining a plurality of functional relationship candidates representing potential relationships among the plurality of columns in the input table; determining probability scores for the plurality of functional relationship candidates by perturbing the input table and ascertaining whether one or more of the plurality of functional relationship candidates holds; identifying a subset of the plurality of functional relationship candidates with probability scores above a predetermined threshold; and generating a display associated with the input table that illustrates the subset of the plurality of functional relationship candidates.
Clause B. The method as recited in clause A, wherein determining the plurality of functional relationship candidates representing potential relationships among the plurality of columns in the input table comprises identifying sets of two or more columns wherein a threshold number of values within each of the two or more columns satisfy a functional relationship.
Clause C. The method as recited in clause B, wherein the functional relationship comprises at least one of an arithmetic relationship, a string transformation relationship, or a functional dependency relationship.
Clause D. The method as recited in clause A, wherein determining probability scores for the plurality of functional relationship candidates comprises, for each of the plurality of functional relationship candidates: repeatedly perturbing the input table; applying the functional relationship candidate to the input table following each perturbation; and determining a probability score for the functional relationship candidate following each perturbation based on whether the functional relationship candidate holds on the input table following the perturbation.
Clause E. The method as recited in clause A, further comprising, prior to determining the probability scores for the plurality of functional relationship candidates, removing functional relationship candidates from the plurality of functional relationship candidates that fail to pass a minimality test.
Clause F. The method as recited in clause A, wherein ascertaining whether each of the plurality of functional relationship candidates holds is in connection with a threshold number of rows within the input table, wherein the threshold number of rows is less than a total number of rows within the input table.
Clause G. The method as recited in clause A, wherein generating the display associated with the input table that illustrates the subset of the plurality of functional relationship candidates comprises generating a new row within the input table that illustrates the subset of the plurality of functional relationship candidates in association with input table columns involved in each of the subset of the plurality of functional relationship candidates.
Clause H. A system comprising: at least one processor; memory in electronic communication with the at least one processor; and instructions stored in memory, the instructions being executable by the at least one processor to: receive an input table comprising a plurality of columns; determine a plurality of functional relationship candidates representing potential relationships among the plurality of columns in the input table; determine probability scores for the plurality of functional relationship candidates by perturbing the input table and ascertaining whether one or more of the plurality of functional relationship candidates holds; identify a subset of the plurality of functional relationship candidates with probability scores above a predetermined threshold; and generate a display associated with the input table that illustrates the subset of the plurality of functional relationship candidates.
Clause I. The system as recited in clause H, wherein the instructions stored in memory are further executable by the at least one processor to determine the plurality of functional relationship candidates representing potential relationships among the plurality of columns in the input table by identifying sets of two or more columns wherein a threshold number of values within each of the two or more columns satisfy a functional relationship.
Clause J. The system as recited in clause I, wherein the functional relationship comprises at least one of an arithmetic relationship, a string transformation relationship, or a functional dependency relationship.
Clause K. The system as recited in clause H, wherein the instructions stored in memory are further executable by the at least one processor to determine probability scores for the plurality of functional relationship candidates by, for each of the plurality of functional relationship candidates: repeatedly perturbing the input table; applying the functional relationship candidate to the input table following each perturbation; and determining a probability score for the functional relationship candidate following each perturbation based on whether the functional relationship candidate holds on the input table following the perturbation.
Clause L. The system as recited in clause H, further storing instructions in memory that are executable by the at least one processor to, prior to determining the probability scores for the plurality of functional relationship candidates, remove functional relationship candidates from the plurality of functional relationship candidates that fail to pass a minimality test.
Clause M. The system as recited in clause H, wherein the instructions stored in memory are further executable by the at least one processor to ascertain whether each of the plurality of functional relationship candidates holds in connection with a threshold number of rows within the input table, wherein the threshold number of rows is less than a total number of rows within the input table.
Clause N. The system as recited in clause H, wherein the instructions stored in memory are further executable by the at least one processor to generate the display associated with the input table that illustrates the subset of the plurality of functional relationship candidates by generating a new row within the input table that illustrates the subset of the plurality of functional relationship candidates in association with input table columns involved in each of the subset of the plurality of functional relationship candidates.
Clause O. A non-transitory computer-readable medium comprising instructions that when executed by one or more processors cause one or more computing devices to: receive an input table comprising a plurality of columns; determine a plurality of functional relationship candidates representing potential relationships among the plurality of columns in the input table; determine probability scores for the plurality of functional relationship candidates by perturbing the input table and ascertaining whether one or more of the plurality of functional relationship candidates holds; identify a subset of the plurality of functional relationship candidates with probability scores above a predetermined threshold; and generate a display associated with the input table that illustrates the subset of the plurality of functional relationship candidates.
Clause P. The non-transitory computer-readable medium of clause O, further comprising instructions that when executed by the one or more processors cause the one or more computing devices to determine the plurality of functional relationship candidates representing potential relationships among the plurality of columns in the input table by identifying sets of two or more columns wherein a threshold number of values within each of the two or more columns satisfy a functional relationship.
Clause Q. The non-transitory computer-readable medium of clause P, wherein the functional relationship comprises at least one of an arithmetic relationship, a string transformation relationship, or a functional dependency relationship.
Clause R. The non-transitory computer-readable medium of clause O, further comprising instructions that when executed by the one or more processors cause the one or more computing devices to determine probability scores for the plurality of functional relationship candidates by, for each of the plurality of functional relationship candidates: repeatedly perturbing the input table; applying the functional relationship candidate to the input table following each perturbation; and determining a probability score for the functional relationship candidate following each perturbation based on whether the functional relationship candidate holds on the input table following the perturbation.
Clause S. The non-transitory computer-readable medium of clause O, further comprising instructions that when executed by the one or more processors cause the one or more computing devices to, prior to determining the probability scores for the plurality of functional relationship candidates, remove functional relationship candidates from the plurality of functional relationship candidates that fail to pass a minimality test.
Clause T. The non-transitory computer-readable medium of clause O, further comprising instructions that when executed by the one or more processors cause the one or more computing devices to ascertain whether each of the plurality of functional relationship candidates holds in connection with a threshold number of rows within the input table, wherein the threshold number of rows is less than a total number of rows within the input table.

The techniques described herein may be implemented in hardware, software, firmware, or any combination thereof, unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium comprising instructions that, when executed by at least one processor, perform one or more of the methods described herein. The instructions may be organized into routines, programs, objects, components, data structures, etc., which may perform particular tasks and/or implement particular data types, and which may be combined or distributed as desired in various embodiments.

The steps and/or actions of the methods described herein may be interchanged with one another without departing from the scope of the claims. In other words, unless a specific order of steps or actions is required for proper operation of the method that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a database, or another data structure), ascertaining and the like. Also, "determining" can include receiving (e.g., receiving information), accessing (e.g., accessing data in a memory) and the like. Also, "determining" can include resolving, selecting, choosing, establishing and the like.

The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element or feature described in relation to an embodiment herein may be combinable with any element or feature of any other embodiment described herein, where compatible.

The present disclosure may be embodied in other specific forms without departing from its spirit or characteristics. The described embodiments are to be considered as illustrative and not restrictive. The scope of the disclosure is, therefore, indicated by the appended claims rather than by the foregoing description. Changes that come within the meaning and range of equivalency of the claims are to be embraced within their scope.

## Claims

1. A method for automatically inferring functional relationships between table columns comprising:
receiving (610) an input table (202) comprising a plurality of columns;
determining (620) a plurality of functional relationship candidates (204) representing potential relationships among the plurality of columns in the input table (202);
determining (630) probability scores (206) for the plurality of functional relationship candidates (204) by perturbing the input table (202) and ascertaining whether one or more of the plurality of functional relationship candidates (204) holds;
identifying (640) a subset of the plurality of functional relationship candidates (204) with probability scores above a predetermined threshold; and
generating (650) a display (208) associated with the input table (202) that illustrates the subset of the plurality of functional relationship candidates (204).

2. The method as recited in claim 1, wherein determining the plurality of functional relationship candidates representing potential relationships among the plurality of columns in the input table comprises identifying sets of two or more columns wherein a threshold number of values within each of the two or more columns satisfy a functional relationship.

3. The method as recited in claim 2, wherein the functional relationship comprises at least one of an arithmetic relationship, a string transformation relationship, or a functional dependency relationship.

4. The method as recited in any preceding claim, wherein determining probability scores for the plurality of functional relationship candidates comprises, for each of the plurality of functional relationship candidates:
repeatedly perturbing the input table;
applying the functional relationship candidate to the input table following each perturbation; and
determining a probability score for the functional relationship candidate following each perturbation based on whether the functional relationship candidate holds on the input table following the perturbation.

5. The method as recited in any preceding claim, further comprising, prior to determining the probability scores for the plurality of functional relationship candidates, removing functional relationship candidates from the plurality of functional relationship candidates that fail to pass a minimality test.

6. The method as recited in any preceding claim, wherein ascertaining whether each of the plurality of functional relationship candidates holds is in connection with a threshold number of rows within the input table, wherein the threshold number of rows is less than a total number of rows within the input table.

7. The method as recited in any preceding claim, wherein generating the display associated with the input table that illustrates the subset of the plurality of functional relationship candidates comprises generating a new row within the input table that illustrates the subset of the plurality of functional relationship candidates in association with input table columns involved in each of the subset of the plurality of functional relationship candidates.

8. A system comprising:
at least one processor;
memory in electronic communication with the at least one processor; and
instructions stored in memory, the instructions being executable by the at least one processor to:
receive (610) an input table (202) comprising a plurality of columns;
determine (620) a plurality of functional relationship candidates (204) representing potential relationships among the plurality of columns in the input table (202);
determine (630) probability scores (206) for the plurality of functional relationship candidates (204) by perturbing the input table (202) and ascertaining whether one or more of the plurality of functional relationship candidates (204) holds;
identify (640) a subset of the plurality of functional relationship candidates (204) with probability scores above a predetermined threshold; and
generate (650) a display (208) associated with the input table (202) that illustrates the subset of the plurality of functional relationship candidates (204).

9. The system as recited in claim 8, wherein the instructions stored in memory are further executable by the at least one processor to determine the plurality of functional relationship candidates representing potential relationships among the plurality of columns in the input table by identifying sets of two or more columns wherein a threshold number of values within each of the two or more columns satisfy a functional relationship.

10. The system as recited in claim 9, wherein the functional relationship comprises at least one of an arithmetic relationship, a string transformation relationship, or a functional dependency relationship.

11. The system as recited in any of claims 8 to 10, wherein the instructions stored in memory are further executable by the at least one processor to determine probability scores for the plurality of functional relationship candidates by, for each of the plurality of functional relationship candidates:
repeatedly perturbing the input table;
applying the functional relationship candidate to the input table following each perturbation; and
determining a probability score for the functional relationship candidate following each perturbation based on whether the functional relationship candidate holds on the input table following the perturbation.

12. The system as recited in any of claims 8 to **11,** further storing instructions in memory that are executable by the at least one processor to, prior to determining the probability scores for the plurality of functional relationship candidates, remove functional relationship candidates from the plurality of functional relationship candidates that fail to pass a minimality test.

13. The system as recited in any of claims 8 to 12, wherein the instructions stored in memory are further executable by the at least one processor to ascertain whether each of the plurality of functional relationship candidates holds in connection with a threshold number of rows within the input table, wherein the threshold number of rows is less than a total number of rows within the input table.

14. The system as recited in any of claims 8 to 13, wherein the instructions stored in memory are further executable by the at least one processor to generate the display associated with the input table that illustrates the subset of the plurality of functional relationship candidates by generating a new row within the input table that illustrates the subset of the plurality of functional relationship candidates in association with input table columns involved in each of the subset of the plurality of functional relationship candidates.

15. A non-transitory computer-readable medium comprising instructions that when executed by one or more processors cause one or more computing devices to:
receive (610) an input table (202) comprising a plurality of columns;
determine (620) a plurality of functional relationship candidates (204) representing potential relationships among the plurality of columns in the input table (202);
determine (630) probability scores (206) for the plurality of functional relationship candidates (204) by perturbing the input table (202) and ascertaining whether one or more of the plurality of functional relationship candidates (204) holds;
identify (640) a subset of the plurality of functional relationship candidates (204) with probability scores above a predetermined threshold; and
generate (650) a display (208) associated with the input table (202) that illustrates the subset of the plurality of functional relationship candidates (204).
